(19) Europäisches Patentamt

European Patent Office

Office européen des brevets

(11) **EP 3 653 336 B1**

(12) **EUROPEAN PATENT SPECIFICATION**

(45) Date of publication and mention
of the grant of the patent:
**03.05.2023 Bulletin 2023/18**

(21) Application number: **18382825.0**

(22) Date of filing: **19.11.2018**

(51) International Patent Classification (IPC):
**B24B 5/18** *(2006.01)*    **B24B 5/22** *(2006.01)*
**B23Q 17/09** *(2006.01)*    **B23Q 15/12** *(2006.01)*
**B23Q 11/00** *(2006.01)*    **B24B 41/00** *(2006.01)*

(52) Cooperative Patent Classification (CPC):
**B24B 5/18; B24B 5/22; B24B 41/007;** B23Q 15/12

(54) **ACTIVELY DAMPENED CENTERLESS GRINDING PROCESS**

AKTIV GEDÄMPFTER SPITZENLOSER SCHLEIFPROZESS

PROCESSUS DE MEULAGE SANS CENTRE À AMORTISSEMENT ACTIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.05.2020 Bulletin 2020/21**

(73) Proprietor: **Ideko, S.Coop.**
**20870 Elgoibar Guipuzcoa (ES)**

(72) Inventors:
• **ASTARLOA BADIOLA, Asier**
**20870 Elgoibar (ES)**

• **EZENARRO LETE, Itsaso**
**20870 Elgoibar (ES)**

(74) Representative: **Plasseraud IP**
**66, rue de la Chaussée d'Antin**
**75440 Paris Cedex 09 (FR)**

(56) References cited:
**EP-A1- 3 078 452       ES-A1- 2 278 496
JP-A- 2005 199 410       US-A1- 2010 022 169
US-A1- 2015 328 744**

**Description**

Field of the Art

The present invention relates to a process for grinding a part in a centerless grinding machine. The proposed process uses a control strategy which, by means of an inertial actuator, allows introducing an active damping force which attenuates vibrations produced due to the grinding process itself, thereby improving the precision of the centerless grinding machine.

State of the art

Grinding is a widely used process to perform abrasive machining operations with greater dimensional precision and a lower degree of roughness compared to a stock-removal machining operation. Mainly due to this reason, grinding is treated as a finishing process, in which the forces of the grinding process are not too large.

In that sense, general grinding focuses essentially on improving precision, and to that end, the techniques used today focus on eliminating constant vibrations of the machine. For example, to improve the precision of the grinding machine, documents JP2005199410A or JP2002254303A proposing techniques for cancelling vibrations due to imbalance in the wheel are known.

However, in centerless grinding, which is a variant of general grinding, these constant vibrations of the machine take a back seat in terms of importance, because centerless grinding is used for surface working operations and not only for finishing operations. To that end, in centerless grinding, the vibrations generated due to the grinding process itself, like in the case of self-excited vibrations (chatter), are particularly relevant.

In centerless grinding, the part is placed in the machine without anything holding it while it is being processed. This process is widely used for producing precise cylindrical parts with high productivity ratios. This is primarily achieved by eliminating the operations for centering and anchoring the part to be ground, which entails a considerable reduction in operation times and the possibility of automating the grinding process. The fact that anchoring is not required means that centerless grinding also constitutes a very interesting process for machining cylindrical parts of small dimensions starting from the surface working operations thereof.

Furthermore, in centerless grinding, the width of the wheel used tends to be significantly greater compared to general grinding processes, thereby causing the forces of the grinding process to increase considerably. All this means that, as indicated above, the precision in centerless grinders depends mainly on the vibrations generated due to the grinding process itself, particularly the chatter, with the vibrations typical of the machine taking a back seat, like in the case of the vibration due to imbalance in the wheel. These process vibrations depend mainly on the dynamic rigidity of the machine and on the grinding conditions.

One of the most effective solutions for eliminating vibrations produced due to the process is to increase damping by acting directly on the dynamic behavior of the grinding machine without having to know the specific data of the process conditions. One way to introduce damping in a passive manner is by using a passive actuator having a suspended mass which can oscillate freely according to the vibration of the machine. In the event that the resonance of the suspended mass coincides with the resonance of the machine, the machine can attenuate the vibration. The drawback of this is that the suspended mass must have a quantifiable value with respect to the modal mass of the vibration, and a bulky actuator which would take up a lot of space in the machine is therefore required. Furthermore, the passive actuator would only work for a specific vibration mode and would not adapt to other different vibration modes that may appear, making it an unsuitable solution for damping process vibrations in a centerless grinding machine, given that the vibration frequencies in machines of this type can vary according to the cutting conditions.

Active damping systems may be a solution for adapting to different vibration modes and attenuating vibrations originating from the grinding process without requiring a very large space for arranging same. These systems are usually made up of vibration detection means, a controller calculating the force to be exerted, and an actuator in charge of introducing the damping force required to attenuate the vibrations.

See, for example, document ES2278496A1, which is basis for the preamble of appended claim 1 and shows an active control system for controlling self-excited vibrations in a centerless grinding machine. This system uses a piezoelectric actuator acting directly on the translation means (a nut-spindle assembly) of the head of the regulating wheel of the grinding machine, whereas vibrations are detected by mechanical stress sensors likewise arranged in the translation means.

In this document, the piezoelectric actuator is arranged in series with the force flow of the grinding machine, i.e., the actuator is arranged in the translation means of the head of the regulating wheel which is in charge of pressing the part against the grinding wheel. Introducing the damping force in series with the force flow of the machine means that the actuator focuses on modifying the actual rigidity of the machine, and to that end, the optimum point of placement is the point where the deformation energy produced by the vibration is the highest. However, with this arrangement, the actuator must provide rigidity at all times, so in the event that the actuator fails, the machine would no longer be able to work in a suitable manner.

On the other hand, as shown in the two documents, JP2005199410A and JP2002254303A, indicated above, cancellation is the most widely used control strategy for addressing the constant vibrations of the machine, like the imbalance in the wheel.

This strategy is based on introducing a force generating a vibration with the same amplitude, frequency, and an opposite phase with respect to the vibration typical of the machine. In this manner, the complete cancellation of vibration is sought, but this requires an actuator with a high force capacity and a precise knowledge of the vibration to be eliminated. To that end, a detailed model of both the dynamics of the machine and the process to be dampened is required. If the cancellation is observed in a simple second degree equation (Equation 1), the force exerted by the actuator ($F_{act}$) would have to be exactly the opposite with respect to the force (F) to be cancelled, thereby demonstrating that the force capacity of the actuator must be very high.

$$m\ddot{x} + c\dot{x} + kx = F + F_{act} \qquad [\text{Equation 1}]$$

However, the precise knowledge of the vibration is impossible when the vibrations originate from the grinding process, and therefore cancellation cannot be used for attenuating vibrations of this type. Furthermore, the use of this control strategy for eliminating the constant vibrations in machine, such as the imbalance in the wheel, may even lead to the case where the vibrations due to the cutting process are amplified as the cancellation may cause the excitation of these other vibration modes (see JP2002254303A).

According to the foregoing, there is a need for a process or method for centerless grinding machines which, by using active damping systems, improves the attenuation of vibrations due to the grinding process itself.

Object of the Invention

The object of the present invention relates to a centerless grinding process in which the vibrations generated during grinding are measured and an active damping force for attenuating vibrations during the process is introduced by means of an inertial actuator.

The process is applied in a centerless grinding machine having wheels, between which there is arranged a part to be ground, and heads carrying the wheels.

The grinding process comprises:

- moving the wheels closer to one another, applying pressure on the part for the grinding thereof, such that vibrations are generated in the grinding machine due to grinding,
- measuring the vibrations due to grinding, and
- introducing, depending on said measurement, an active damping force parallel to the force flow of the grinding machine and by means of using an inertial actuator acting directly on one of the heads, such that the vibrations due to grinding are attenuated.

Unlike documents ES2278496A1 or JP2005199410A, in which the actuator is arranged in series with respect to the force flow of the grinding machine, the invention proposes introducing the damping force parallel to the force flow of the grinding machine. In that manner, when the damping force is introduced in parallel, the original properties of the machine are not modified and the damping force is introduced as an external force. Normal machine operation is thereby assured even when the actuator is not in operation. When introducing the damping force in parallel, the optimum point of placement is the point with the greatest vibration movement.

The occurrence of vibrations is thereby detected during grinding, and by means of the inertial actuator, the moving mass of the actuator which is arranged in the head can be accelerated such that the force required for damping the vibrations is introduced. The vibrations produced in the grinding machine during grinding of the part are thereby attenuated or eliminated in real time and in an efficient manner.

When surface working operations are performed with high grinding forces like in the case of centerless grinding machines, there are primarily two critical vibration modes which correspond with the head opening modes, i.e., a relative movement for moving the heads carrying the wheels and the part closer to/farther away from one another occur in the direction in which the wheel applies pressure on the part. To that end, the active damping force is preferably introduced in an upper portion of at least one of the heads, as it has been experimentally confirmed as the point with the greatest movement due to vibration.

Preferably, the vibrations are measured in the two heads, with an active damping force being introduced in each head by means of a respective inertial actuator, such that the vibrations due to grinding in the two heads are attenuated.

Preferably, the active damping force is introduced at the same point of the machine where the vibrations are measured.

Even more preferably, the vibrations are measured in the upper portion of the head and the active damping force is applied in that upper portion of the head.

Detection means and an inertial actuator which are arranged in a co-located manner are therefore used, thus making the attenuation of the vibrations produced in the machine more effective. This co-located distribution in which the detection means and the inertial actuators are located at one and the same point is recommended because this way all the vibration modes existing in the bandwidth of the inertial actuator may be attenuated in theory. In the case of a non-co-located distribution, like in the case of document JP2005199410A, vibration control may be hindered when there are vibration modes with different phase between the measurement point and the actuation point within the bandwidth of the actuator.

The inertial actuator is configured for generating a movement of the moving mass thereof depending on the measurement of the vibration taken by the detection means. Preferably, the inertial actuator used is a hydraulic actuator, an electromagnetic actuator, or a linear motor in charge of accelerating the moving mass, which allow introducing a controlled force.

The choice of the actuator depends on the force and the frequency bandwidth required of the actuator. In centerless grinding operations, the structural modes having a low frequency of less than 300 Hz, specifically between 10-300 Hz, which require certain movement of the mass of the inertial actuator, are extremely critical. In documents ES2278496A1 and JP2005199410A, piezoelectric actuators arranged in series with the force flow of the grinding machine are used. Piezoelectric actuators constitute the most widely used actuators that are arranged in series with the force flow of the machine, where they must have a high-energy deformation energy. However, it has been observed that, due to their high vulnerability, piezoelectric actuators are not suitable for making low-frequency inertial actuators in which a considerable movement is required, like in the case of centerless grinding.

The inertia of the motion of the mass of the inertial actuator is what introduces the active damping force in the machine, with the amplitude, frequency, and phase of said force being dependent on the control strategy used.

Preferably, the control strategy used by the invention is based on measuring the speed of the vibrations due to grinding, preferably measurements in the head, and applying by means of the inertial actuator a force proportional to the amplitude of that speed, with the same frequency, but with the opposite phase. By introducing the damping force this way, damping proportional to the amplitude of the introduced force which allows increasing the dynamic rigidity of the machine is introduced.

The control strategy can be explained mathematically in a simple manner based on the simple equation of motion (Equations 1 - 3), where x is the vibration movement of the machine and *m,* c, and k are the mass, the damping, and the modal rigidity of the machine, respectively. F refers to the force the machine experiences during grinding which is to be attenuated or eliminated, whereas $F_{act}$ is the force exerted by the inertial actuator.

$$m\ddot{x} + c\dot{x} + kx = F + F_{act} \qquad \text{[Equation 1]}$$

$$F_{act} = -G \cdot \dot{x} \qquad \text{[Equation 2]}$$

$$m\ddot{x} + (c + G)\dot{x} + kx = F \qquad \text{[Equation 3]}$$

It is a feedback strategy, so it does not require knowledge about the dynamic parameters of the machine or the cutting conditions used. Furthermore, in contrast to what occurs with cancellation strategies, like those described in documents JP2005199410A and JP2002254303A, the force capacity required of the inertial actuator is not as large, since it is not required to exert a force that is equal to the vibration force to be attenuated.

Alternatively, a simple model of the dynamics of the machine can be developed so that the control strategy is based on making the inertial actuator behave as a passive damper (tuned mass damper). The main drawbacks of passive dampers are that they are limited to reducing a single vibration frequency and that the required mass is very high. However, by means of the active control strategy simulating this behavior, different frequencies can be attenuated and it can be designed for simulating different mass magnitudes. Therefore, like the strategy proposed above, no knowledge about the cutting conditions or the vibration to be produced is required.

Mathematically, this strategy proposes introducing an active damping force ($F_{act}$) which is a function of the frequency ($\omega_a$) and of the desired relative damping ($\xi_a$) in the virtual passive mass, where $\mu$ is the ratio between the virtual passive mass and the mass of the machine ($\mu=m_a/m$). According to this, with this alternative control strategy an active damping force ($F_{act}$) is introduced according to the following equation:

$$F_{act} = -\mu m \cdot \frac{2\xi_a \omega_a \cdot \ddot{x} + \omega_a^2 \cdot \dot{x}}{\dddot{x} + 2\xi_a \omega_a \cdot \ddot{x} + \omega_a^2 \cdot x} \qquad \text{[Equation 4]}$$

where:

*m* is the mass of the grinding machine
$\mu$ is the ratio between the virtual passive mass of the actuator and the mass of the machine ($\mu = m_a/m$)
x is the movement measured due to vibrations $\omega_a$ is the desired oscillation frequency in the virtual passive mass
$\xi_a$ is the desired relative damping in the virtual passive mass

According to the foregoing, a process for grinding parts in a centerless grinding machine, which allows improving grinding precision by attenuating vibrations originated in the machine due to the grinding process itself, is obtained.

Description of the Drawings

Figure 1 shows an example of a centerless grinding machine in which the grinding process of the invention can be applied.
Figure 2 shows a schematic view of the two main vibration modes of the machine of Figure 1.
Figure 3 shows a schematic view of an actuator arranged in series with the force flow of a grinding machine.
Figure 4 shows a view like that of the preceding figure, but with the inertial actuator arranged parallel to the force flow of the grinding machine as proposed by the invention.
Figure 5 shows a comparison of the damping force used in a cancellation control strategy according to the state of the art.
Figure 6 shows a comparison of the damping force used in an active damping control strategy like the one proposed by the invention.

Detailed Description of the Invention

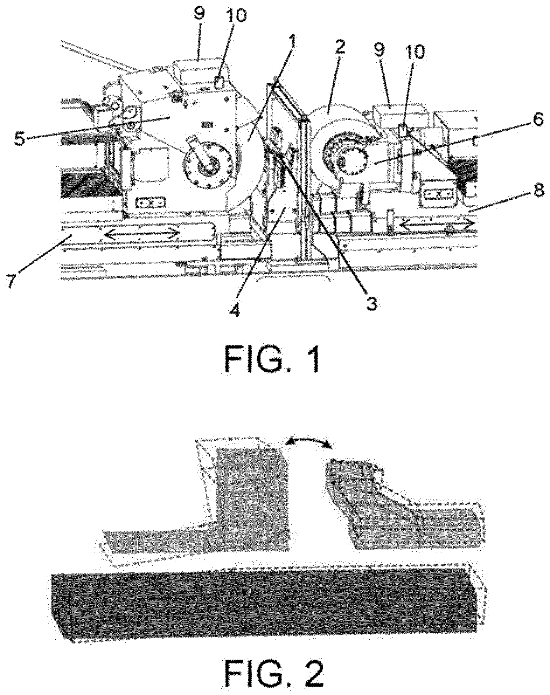

Figure 1 shows an example of a centerless grinding machine in which the grinding process of the invention can be applied. The grinding machine comprises two wheels (1, 2), a grinding wheel (1) and a regulating wheel (2), between which there is arranged a part (3) to be ground supported on holding means (4). Each wheel (1, 2) is arranged in a head (5, 6) and each head (5, 6) is arranged on translation means (8, 9).
The machine configuration depicted in Figure 1 is not limiting for the invention, where it is obvious for one skilled in the art that the grinding process may be applied in centerless grinding machines with a different machine configuration.
By means of the movement of the heads (5, 6), the wheels (1, 2) move closer to/farther away from one another in a direction perpendicular to the part (3). Therefore, in operation, the wheels (1, 2) apply pressure on the part (3) in the direction in which the wheels (1, 2) move closer to one another, such that the part (3) is retained between the wheels (1, 2), being supported such that it freely rotates about the holding means (4), so the part (3) is ground by means of rotation of the wheels (1, 2).
The grinding process itself creates forces which cause the excitation of the vibration modes of the different components of the machine, such as the heads (5, 6), which generates vibrations that are transmitted to the machining point located in the contact area between the part (3) and the wheels (1, 2). This causes geometric defects or excessive wear of the machining tool, or a poor surface finish of the part (3), among other factors. As can be seen in Figure 2, the centerless grinding machine has two main vibration modes which cause the heads (5, 6) to bend, resulting in them moving farther away from or closer to one another.
The invention proposes a grinding process for centerless grinding machines whereby those vibrations due to the grinding process itself can be attenuated or even eliminated.
The grinding process proposed by the invention therefore comprises moving the wheels (1, 2) closer to one another by applying pressure on the part (3) for the grinding thereof, measuring the vibrations generated due to grinding, and introducing, depending on said measurement, an active damping force ($F_{act}$), which is introduced parallel to the force flow of the grinding machine, and by means of using an inertial actuator (10) that acts on one of the heads (5, 6), such that the vibrations due to grinding are attenuated.
The measurement of the vibrations due to grinding is taken using detection means (9), such as accelerometers, for example. The detection means (9) are particularly configured for measuring low frequencies of less than 300 Hz, and preferably a frequency range between 10-300 Hz. To that end, the use of filters which discriminate noise due to frequencies that are outside the preferred range indicated above has been envisaged.

As shown in the example of Figure 1, the arrangement of the inertial actuator in the upper portion of the head (5, 6), which is the part of the machine where the greatest movement due to vibrations of the grinding process occurs, has been envisaged.

To improve machine precision, an inertial actuator (10) is arranged in each head, such that an active damping force ($F_{act}$) is introduced in each head (5, 6) .

The detection means (9) are arranged in the head (5, 6), such that the detection means (9) and the inertial actuator (10) introducing the force are co-located at the same point.

In the example of Figure 1, the vibrations are measured in the two heads (5, 6), with an active damping force ($F_{act}$) being introduced in each head (5, 6) by means of a respective inertial actuator (10), such that the vibrations due to grinding in the two heads are attenuated (5, 6).

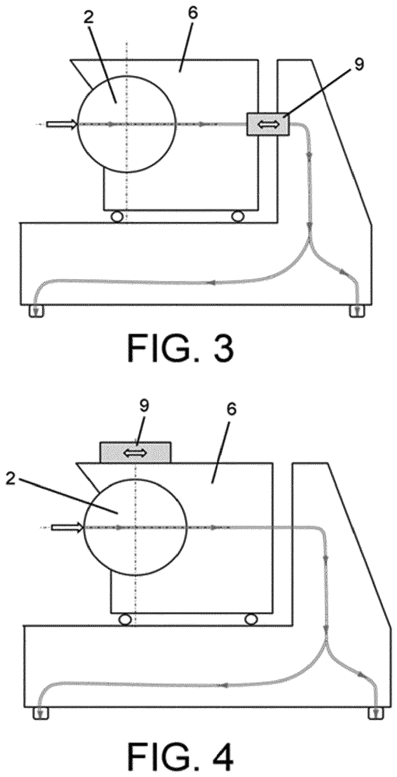

Figure 3 shows a schematic view of an actuator (9) arranged in series with the force flow of the grinding machine, as proposed by the documents of the state of the art ES2278496A1 or JP2005199410A, whereas Figure 4 shows another schematic view of an inertial actuator (9) arranged parallel to the force flow of the grinding machine, as proposed by the invention.

The force flow of the grinding machine, also referred to as "path force", is depicted in the drawings by a line with arrows. This flow refers to the path the transmission of the force required for grinding the parts would follow inside the machine.

When the actuator is arranged in series, as proposed by documents ES2278496A1 or JP2005199410A, as the force flow passes through the actuator, the actuator can modify the original dynamic properties of the machine, and thereby dampen the created vibrations, while at the same time having to withstand the grinding forces. To that end, the actuators arranged in series must provide a very high rigidity and in the event that the actuator fails, the machine would not perform proper grinding.

In contrast, if the inertial actuator is arranged in parallel, as proposed by the invention, the damping force is introduced as if it was an external force and it has no effect whatsoever on the original rigidity of the machine. To that end, even in the event of the actuator failing, the machine would still have its original rigidity and perform proper grinding.

According to one embodiment of the invention, a control strategy which is based on measuring the vibration speed of the head (5, 6) and applying, by means of the inertial actuator (10), a force proportional to the amplitude of that speed, is used to perform active damping.

In that sense, the force required by the actuator would not be as large as in the case of cancellation and would not require knowledge about the dynamics of the machine or the process to be dampened.

The use of active damping by means of feedback, as proposed by the invention, the objective of which is to provide the machine with a higher dynamic rigidity depending on the measured vibration, is highly effective for eliminating process vibrations. This feedback strategy is not valid for forced constant vibrations, like in the case of the vibration due to imbalance in the wheel, but it is indeed highly effective against process vibrations, because the increase in the dynamic rigidity of the machine causes these vibrations to be completely attenuated using a force that is less than the vibration force.

According to another embodiment of the invention, to perform active damping, a control strategy which is based on a dynamic model of the machine is used to cause the inertial actuator to behave like a passive damper (tuned mass damper). This virtual passive damper can attenuate different frequencies and can be designed for simulating different mass magnitudes, thereby eliminating the drawbacks of passive dampers. Furthermore, the force required of the actuator would also be much less than the force required in the cancellation, as it is also based on feedback of the vibration parameters. Although the need of the dynamic model makes it less attractive compared to the simple feedback, the fact that the dynamic behavior does not vary according to the position of its components means that it is not necessary to adjust the model in each process, since the control strategy does not require knowledge about the conditions of the grinding process.

A table comparing a control strategy based on cancellation, like in the case of documents JP2005199410A or JP2002254303A, and a control strategy based on active damping, like in the case of the two strategies proposed by the present invention, is show below.

As can be seen, among other advantageous aspects, in the case of active damping, the force required by the inertial actuator is much less than the force required in the cancellation, and furthermore cancellation is a pre-control strategy in which a precise knowledge about the vibration to be cancelled is required, whereas active damping is a feedback strategy in which a precise knowledge about the vibration is not required in order to be able to attenuate it.

| | Cancellation | Active damping | |
|---|---|---|---|
| | | Speed feedback | Virtual passive damping |
| $F_{act}$ | $-F = -(m\ddot{x} + c\dot{x} + kx)$ | $F_{act} = -G \cdot \dot{x}$ | $F_{act} = -\mu m \cdot \dfrac{2\xi_a \omega_a \cdot \ddot{x} + \omega_a^2 \cdot \dot{x}}{\dddot{x} + 2\xi_a \omega_a \cdot \ddot{x} + \omega_a^2 \cdot x}$ |
| Type | Pre-control/Feedforward | Feedback | Feedback |

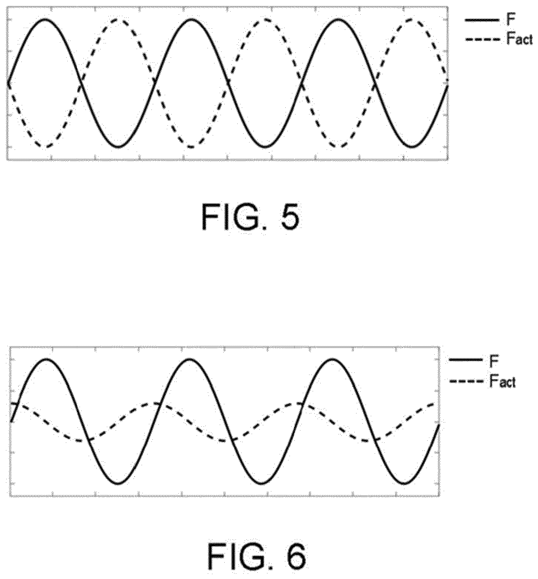

Figure 5 shows a comparative graph for a cancellation control strategy according to the prior state of the art in which the damping force ($F_{act}$), depicted by lines, has the same amplitude and an opposite phase with respect to the force (F) to be cancelled, whereas Figure 6 shows a comparative graph for an active damping control strategy in which it is clearly seen that the required damping force ($F_{act}$) is less than the damping force ($F_{act}$) used for the cancellation.

**Claims**

1. An actively dampened centerless grinding process for a centerless grinding machine having wheels (1, 2), between which there is arranged a part (3) to be ground, and heads (5, 6) carrying the wheels (1, 2), the grinding process comprising:

   • moving the wheels (1, 2) closer to one another, applying pressure on the part (3) for the grinding thereof, such that vibrations will be generated in the grinding machine due to grinding,
   • measuring the vibrations due to grinding, and
   • introducing, depending on said measurement, an active damping force ($F_{act}$) by means of using an inertial actuator (10) such that the vibrations due to grinding are attenuated,

   **characterized by** said active damping force ($F_{act}$) being parallel to the force flow of the grinding machine and said inertial actuator (10) acting directly on one of the heads (5, 6).

2. The actively dampened centerless grinding process according to the preceding claim, **characterized in that** the active damping force ($F_{act}$) is introduced in an upper portion of the head (5, 6).

3. The actively dampened centerless grinding process according to any one of the preceding claims, **characterized in that** the vibrations are measured in the heads (5, 6), with an active damping force ($F_{act}$) being introduced in each head (5, 6) by means of a respective inertial actuator (10), such that the vibrations due to grinding in the heads (5, 6) are attenuated.

4. The actively dampened centerless grinding process according to any one of the preceding claims, **characterized in that** the active damping force ($F_{act}$) is introduced at the same point of the machine where the vibrations are measured.

5. The actively dampened centerless grinding process according to the preceding claim, **characterized in that** the vibrations are measured in the upper portion of the head (5, 6) and the active damping force (Fact) is applied **in that** upper portion of the head (5, 6).

6. The actively dampened centerless grinding process according to any one of the preceding claims, **characterized in that** the inertial actuator (10) used is a hydraulic actuator, an electromagnetic actuator, or a linear motor in charge of accelerating a moving mass.

7. The actively dampened centerless grinding process according to any one of the preceding claims, **characterized in that** the vibrations due to grinding are measured using detection means (9) measuring low frequencies less than 300 Hz.

8. The actively dampened centerless grinding process according to the preceding claim, **characterized in that** the vibrations are measured in a frequency range between 10-300 Hz.

9. The actively dampened centerless grinding process according to any one of the preceding claims, **characterized**

**in that** the active damping force ($F_{act}$) is introduced in the direction in which the wheels (1, 2) apply pressure on the part (3) .

10. The actively dampened centerless grinding process according to any one of the preceding claims, **characterized in that** the introduced active damping force ($F_{act}$) is proportional to the speed of the vibrations due to grinding that have been measured, and it is introduced at the same frequency, and with an opposite phase, with respect to the speed of the measured vibrations.

11. The actively dampened centerless grinding process according to any one of claims 1 to 9, **characterized in that** the introduced active damping force ($F_{act}$) is a function of the frequency ($\omega_a$) and of the desired relative damping ($\xi_a$) in a virtual passive mass, such that the behavior of a passive damper is virtually simulated.

12. The actively dampened centerless grinding process according to the preceding claim, **characterized in that** the active damping force ($F_{act}$) is a function of the following equation:

$$F_{act} = -\mu m \cdot \frac{2\xi_a \omega_a \cdot \ddot{x} + \omega_a^2 \cdot \dot{x}}{\dddot{x} + 2\xi_a \omega_a \cdot \dot{x} + \omega_a^2 \cdot x}$$

where:

$m$ is the mass of the grinding machine,
$\mu$ is the ratio between the virtual passive mass of the inertial actuator $m_a$ and the mass of the machine $m$. ($\mu = m_a/m$),
x is the movement measured due to vibrations,
$\omega_a$ is the desired oscillation frequency in the virtual passive mass,
$\xi_a$ is the desired relative damping in the virtual passive mass.

**Patentansprüche**

1. Aktiv gedämpfter spitzenloser Schleifprozess für eine spitzenlose Schleifmaschine mit Rädern (1, 2), zwischen denen ein Teil (3), das geschliffen werden soll, angeordnet ist, und Köpfen (5, 6), welche die Räder (1, 2) tragen, wobei der Schleifprozess aufweist:

- Bewegen der Räder (1, 2) näher aneinander, Anwenden von Druck auf das Teil (3) für dessen Schleifen, so dass in der Schleifmaschine aufgrund des Schleifens Schwingungen erzeugt werden,
- Messen der Schwingungen aufgrund des Schleifens, und
- abhängig von der Messung Zuführen einer aktiven Dämpfungskraft ($F_{act}$) mittels eines trägen Aktuators (10), so dass die Schwingungen aufgrund des Schleifens gedämpft werden, **dadurch gekennzeichnet, dass** die aktive Dämpfungskraft ($F_{act}$) parallel zu dem Kraftfluss der Schleifmaschine ist und der träge Aktuator (10) direkt auf einen der Köpfe (5, 6) einwirkt.

2. Aktiv gedämpfter spitzenloser Schleifprozess nach dem vorangehenden Anspruch, **dadurch gekennzeichnet, dass** die aktive Dämpfungskraft ($F_{act}$) in einem oberen Abschnitt des Kopfs (5, 6) zugeführt wird.

3. Aktiv gedämpfter spitzenloser Schleifprozess nach einem der vorangehenden Ansprüche, **dadurch gekennzeichnet, dass** die Schwingungen in den Köpfen (5, 6) gemessen werden, wobei mittels eines jeweiligen trägen Aktuators (10) eine aktive Dämpfungskraft ($F_{act}$) in jeden Kopf (5, 6) zugeführt wird, so dass die Schwingungen aufgrund des Schleifens in den Köpfen (5, 6) gedämpft werden.

4. Aktiv gedämpfter spitzenloser Schleifprozess nach einem der vorangehenden Ansprüche, **dadurch gekennzeichnet, dass** die aktive Dämpfungskraft ($F_{act}$) an dem gleichen Punkt der Maschine zugeführt wird, wo die Schwingungen gemessen werden.

5. Aktiv gedämpfter spitzenloser Schleifprozess nach dem vorangehenden Anspruch, **dadurch gekennzeichnet, dass** die Schwingungen in dem oberen Abschnitt des Kopfs (5, 6) gemessen werden und die aktive Dämpfungskraft ($F_{act}$) in diesem oberen Abschnitt des Kopfs (5, 6) angewendet wird.

**6.** Aktiv gedämpfter spitzenloser Schleifprozess nach einem der vorangehenden Ansprüche, **dadurch gekennzeichnet, dass** der verwendete träge Aktuator (10) ein hydraulischer Aktuator, ein elektromagnetischer Aktuator oder ein Linearmotor ist, der dafür verantwortlich ist, eine sich bewegende Masse zu beschleunigen.

**7.** Aktiv gedämpfter spitzenloser Schleifprozess nach einem der vorangehenden Ansprüche, **dadurch gekennzeichnet, dass** die Schwingungen aufgrund des Schleifens unter Verwendung einer Erfassungseinrichtung (9), die niedrige Frequenzen von weniger als 300 Hz misst, gemessen werden.

**8.** Aktiv gedämpfter spitzenloser Schleifprozess nach dem vorangehenden Anspruch, **dadurch gekennzeichnet, dass** die Schwingungen in einem Frequenzbereich zwischen 10 und 300 Hz gemessen werden.

**9.** Aktiv gedämpfter spitzenloser Schleifprozess nach einem der vorangehenden Ansprüche, **dadurch gekennzeichnet, dass** die aktive Dämpfungskraft ($F_{act}$) in die Richtung zugeführt wird, in welche die Räder (1, 2) Druck auf das Teil (3) anwenden.

**10.** Aktiv gedämpfter spitzenloser Schleifprozess nach einem der vorangehenden Ansprüche, **dadurch gekennzeichnet, dass** die zugeführte aktive Dämpfungskraft ($F_{act}$) proportional zu der Geschwindigkeit der Schwingungen aufgrund des Schleifens, die gemessen wurden, ist und sie mit der gleichen Frequenz und mit einer in Bezug auf die Geschwindigkeit der gemessenen Schwingungen entgegengesetzten Phase zugeführt wird.

**11.** Aktiv gedämpfter spitzenloser Schleifprozess nach einem der Ansprüche 1 bis 9, **dadurch gekennzeichnet, dass** die eingeführte aktive Dämpfungskraft ($F_{act}$) eine Funktion der Frequenz ($\omega_a$) und der gewünschten relativen Dämpfung ($\xi_a$) in einer virtuellen passiven Masse ist, so dass das Verhalten eines passiven Dämpfers virtuell simuliert wird.

**12.** Aktiv gedämpfter spitzenloser Schleifprozess nach dem vorangehenden Anspruch, **dadurch gekennzeichnet, dass** die aktive Dämpfungskraft ($F_{act}$) eine Funktion der folgenden Gleichung ist

$$F_{act} = -\mu m \cdot \frac{2\xi_a \omega_a \cdot \ddot{x} + \omega_a^2 \cdot \dot{x}}{\dddot{x} + 2\xi_a \omega_a \cdot \ddot{x} + \omega_a^2 \cdot x}$$

wobei

m die Masse der Schleifmaschine ist,
$\mu$ das Verhältnis zwischen der virtuellen passiven Masse des trägen Aktuators $m_a$ und der Masse der Maschine m ist ($\mu = m_a/m$),
x die aufgrund von Schwingungen gemessene Bewegung ist,
$\omega_a$ die gewünschte Schwingungsfrequenz in der virtuellen passiven Masse ist,
$\xi_a$ die gewünschte relative Dämpfung in der virtuellen passiven Masse ist.

## Revendications

**1.** Processus de meulage sans centre à amortissement actif pour une meuleuse sans centre présentant des roues (1, 2), entre lesquelles est agencée une pièce (3) à meuler, et des têtes (5, 6) portant les roues (1, 2), le processus de meulage comprenant :

• le rapprochement des roues (1, 2) l'une de l'autre, l'application d'une pression sur la pièce (3) pour le meulage de celle-ci, de telle sorte que des vibrations seront générées dans la meuleuse en raison du meulage,
• la mesure des vibrations en raison du meulage, et
• l'introduction, en fonction de ladite mesure, d'une force d'amortissement active ($F_{act}$) au moyen de l'utilisation d'un actionneur inertiel (10) de telle sorte que les vibrations dues au meulage sont atténuées,

**caractérisé par le fait que** ladite force d'amortissement active ($F_{act}$) est parallèle au flux de force de la meuleuse et ledit actionneur inertiel (10) agit directement sur une des têtes (5, 6).

**2.** Processus de meulage sans centre à amortissement actif selon la revendication précédente, **caractérisé en ce que** la force d'amortissement active ($F_{act}$) est introduite dans une partie supérieure de la tête (5, 6).

3. Processus de meulage sans centre à amortissement actif selon l'une quelconque des revendications précédentes, **caractérisé en ce que** les vibrations sont mesurées dans les têtes (5, 6), avec une force d'amortissement active (F$_{act}$) introduite dans chaque tête (5, 6) au moyen d'un actionneur inertiel (10) respectif, de telle sorte que les vibrations dues au meulage dans les têtes (5, 6) sont atténuées.

4. Processus de meulage sans centre à amortissement actif selon l'une quelconque des revendications précédentes, **caractérisé en ce que** la force d'amortissement active (F$_{act}$) est introduite au niveau du même point de la machine lorsque les vibrations sont mesurées.

5. Processus de meulage sans centre à amortissement actif selon la revendication précédente, **caractérisé en ce que** les vibrations sont mesurées dans la partie supérieure de la tête (5, 6) et la force d'amortissement active (Fact) est appliquée dans cette partie supérieure de la tête (5, 6).

6. Processus de meulage sans centre à amortissement actif selon l'une quelconque des revendications précédentes, **caractérisé en ce que** l'actionneur inertiel (10) utilisé est un actionneur hydraulique, un actionneur électromagnétique, ou un moteur linéaire responsable de l'accélération d'une masse mobile.

7. Processus de meulage sans centre à amortissement actif selon l'une quelconque des revendications précédentes, **caractérisé en ce que** les vibrations dues au meulage sont mesurées à l'aide de moyens de détection (9) mesurant les basses fréquences inférieures à 300 Hz.

8. Processus de meulage sans centre à amortissement actif selon la revendication précédente, **caractérisé en ce que** les vibrations sont mesurées dans une plage de fréquences comprise entre 10 et 300 Hz.

9. Processus de meulage sans centre à amortissement actif selon l'une quelconque des revendications précédentes, **caractérisé en ce que** la force d'amortissement active (F$_{act}$) est introduite dans la direction dans laquelle les roues (1, 2) appliquent une pression sur la pièce (3).

10. Processus de meulage sans centre à amortissement actif selon l'une quelconque des revendications précédentes, **caractérisé en ce que** la force d'amortissement active (F$_{act}$) introduite est proportionnelle à la vitesse des vibrations dues au meulage qui ont été mesurées, et elle est introduite à la même fréquence, et avec une phase opposée, par rapport à la vitesse des vibrations mesurées.

11. Processus de meulage sans centre à amortissement actif selon l'une quelconque des revendications 1 à 9, **caractérisé en ce que** la force d'amortissement active (F$_{act}$) introduite dépend de la fréquence ($\omega_a$) et de l'amortissement relatif ($\xi_a$) souhaité dans une masse passive virtuelle, de telle sorte que le comportement d'un amortisseur passif est simulé virtuellement.

12. Processus de meulage sans centre à amortissement actif selon la revendication précédente, **caractérisé en ce que** la force d'amortissement active (F$_{act}$) dépend de l'équation suivante :

$$F_{act} = -\mu m \cdot \frac{2\xi_a \omega_a \cdot \ddot{x} + \omega_a^2 \cdot \dot{x}}{\ddot{x} + 2\xi_a \omega_a \cdot \dot{x} + \omega_a^2 \cdot x}$$

où :

m est la masse de la meuleuse,
$\mu$ est le rapport entre la masse passive virtuelle de l'actionneur inertiel m$_a$ et la masse de la machine m. ($\mu$=m$_a$/m),
x est le mouvement mesuré dû aux vibrations,
$\omega_a$ est la fréquence d'oscillation souhaitée dans la masse passive virtuelle,
$\xi_a$ est l'amortissement relatif souhaité dans la masse passive virtuelle.

FIG. 1

FIG. 2

FIG. 3

FIG. 4

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005199410 A

- JP 2002254303 A
- ES 2278496 A1